# EUROPEAN PATENT APPLICATION

(11) **EP 4 446 730 A1**
(43) Date of publication of application: **16.10.2024**
(21) Application number: 21967220.1
(22) Date of filing: 09.12.2021
(51) Int. Cl.: G01N 21/90

(54) **FOREIGN MATTER INSPECTING DEVICE**

(71) Applicant: NEC Corporation, 108-8001 Tokyo (JP)
(72) Inventor: YACHIDA, Shoji, Tokyo 108-8001 (JP); YAMAGUCHI, Masahiro, Tokyo 108-8001 (JP)
(74) Representative: Betten & Resch
(86) International application number: PCT/JP2021/045388
(87) International publication number: WO 2023/105724

(57) **Abstract**

A foreign object inspection device includes an acquisition means and a determination means. The acquisition means acquires an image around a liquid surface in the shape of a paraboloid of revolution in a transparent container. The liquid surface in the shape of a paraboloid of revolution is formed when the transparent container containing a transparent liquid is rotated about a central axis at a given speed. The image is captured from a side of the transparent container under the transmitted illumination. The determination means acquires a luminance value of a pixel along a line extending in a direction parallel to the central axis in the image, generates one-dimensional data of the luminance values, and on the basis of a spatial change in the luminance values in the one-dimensional data, determines whether or not there is a foreign object on the liquid surface.

## Description

### TECHNICAL FIELD

The present invention relates to a foreign object inspection device configured to inspect presence or absence of a foreign object floating on a liquid surface, an information processing method, and a storage medium.

### BACKGROUND ART

Various types of devices configured to inspect whether or not there is a foreign object in the liquid contained in a transparent container have been used in practice. Many of them mainly detect presence or absence of a foreign object floating in the liquid (for example, see Patent Literature 1 and 2). However, a foreign object such as a plastic piece may float on a liquid surface of injection preparation or the like contained in a transparent container. Therefore, it is important to inspect present or absence of a foreign object floating on a liquid surface.

An example of a device configured to inspect presence or absence of a foreign object floating on a liquid surface is described in Patent Literature 3. In the art described in Patent Literature 3 (hereinafter referred to as art related to the present invention), illumination light is emitted to the rear side of a liquid surface from the bottom of a transparent container, and the rear side of the liquid surface is imaged by an imaging means disposed on the advancing path of the light reflected on the rear side of the liquid surface, and whether or not there is a foreign object on the liquid surface is determined based on the captured image.

### CITATION LIST

### PATENT LITERATURE

Patent Literature 1: JP 2-203259 A
Patent Literature 2: JP 4-6900 A
Patent Literature 3: JP 2001-296251 A

### SUMMARY OF INVENTION

### TECHNICAL PROBLEM

In the art related to the present invention, when a liquid surface is a completely flat surface, the liquid surface is imaged as a uniform white region, and a foreign object floating on the liquid surface is captured as a blackish image according to the reflection coefficient thereof. However, there is a case where it is difficult to stably determine that there is no foreign object on a liquid surface because of appearance of a blackish area that is hard to be distinguished from an image of a foreign object due to various grounds.

An object of the present invention is to provide a foreign object inspection device that solves the above-described problem.

### SOLUTION TO PROBLEM

A foreign object inspection device, according to one aspect of the present invention, is configured to include
an acquisition means for acquiring an image around a liquid surface in the shape of a paraboloid of revolution in a transparent container, the liquid surface in the shape of a paraboloid of revolution being formed when the transparent container containing a transparent liquid is rotated about a central axis at a given speed, the image being captured from a side of the transparent container under transmitted illumination; and
a determination means for acquiring a luminance value of a pixel along a line extending in a direction parallel to the central axis in the image, generating one-dimensional data of the luminance values, and on the basis of a spatial change in the luminance values in the one-dimensional data, determining whether or not there is a foreign object on the liquid surface.

Further, a foreign object inspection method, according to another aspect of the present invention, is configured to include
acquiring an image around a liquid surface in the shape of a paraboloid of revolution in a transparent container, the liquid surface in the shape of a paraboloid of revolution being formed when the transparent container containing a transparent liquid is rotated about a central axis at a given speed, the image being captured from a side of the transparent container under transmitted illumination; and
acquiring a luminance value of a pixel along a line extending in a direction parallel to the central axis in the image, and generating one-dimensional data of the luminance values;
and on the basis of a spatial change in the luminance values in the one-dimensional data, determining whether or not there is a foreign object on the liquid surface.

Further, a computer-readable medium, according to another aspect of the present invention, is configured to store thereon a program for causing a computer to execute processing to:
acquire an image around a liquid surface in the shape of a paraboloid of revolution in a transparent container, the liquid surface in the shape of a paraboloid of revolution being formed when the transparent container containing a transparent liquid is rotated about a central axis at a given speed, the image being captured from a side of the transparent container under transmitted illumination;
acquire a luminance value of a pixel along a line extending in a direction parallel to the central axis in the image, and generate one-dimensional data of the luminance values; and
on the basis of a spatial change in the luminance values in the one-dimensional data, determine whether or not there is a foreign object on the liquid surface.

### ADVANTAGEOUS EFFECTS OF INVENTION

Since the present invention has the configurations described above, it is possible to stably determine that there is no foreign object on a liquid surface.

### BRIEF DESCRIPTION OF DRAWINGS

[Fig. 1] Fig. 1 is a schematic diagram illustrating an image obtained by capturing the vicinity of a liquid surface in the shape of a paraboloid of revolution without any foreign objects and bubbles, and one-dimensional data of a luminance value created by acquiring the luminance value of a pixel along the central axis.
[Fig. 2] Fig. 2 is a schematic diagram illustrating an image obtained by capturing the vicinity of a liquid surface in which a liquid surface in the shape of a paraboloid of revolution is not formed.
[Fig. 3] Fig. 3 is a schematic diagram illustrating an image obtained by capturing the vicinity of a liquid surface in the shape of a paraboloid of revolution with a foreign object, and one-dimensional data of a luminance value created by acquiring the luminance value of a pixel along the central axis.
[Fig. 4] Fig. 4 is a schematic diagram illustrating an image obtained by capturing the vicinity of a liquid surface in the shape of a paraboloid of revolution with bubbles, and one-dimensional data of a luminance value created by acquiring the luminance value of a pixel along the central axis.
[Fig. 5] Fig. 5 is a block diagram of an inspection system to which a foreign object inspection device according to a first example embodiment of the present invention is applied.
[Fig. 6] Fig. 6 is a block diagram of a foreign object inspection device according to the first example embodiment of the present invention.
[Fig. 7] Fig. 7 illustrates a configuration example of image information according to the first example embodiment of the present invention.
[Fig. 8] Fig. 8 illustrates a configuration example of inspection result information according to the first example embodiment of the present invention.
[Fig. 9] Fig. 9 is a flowchart illustrating an example of operation of the foreign object inspection device according to the first example embodiment of the present invention.
[Fig. 10] Fig. 10 is a flowchart illustrating an example of processing performed by a determination unit in the foreign object inspection device according to the first example embodiment of the present invention.
[Fig. 11] Fig. 11 illustrates a format example of a control table used by the determination unit in the foreign object inspection device according to the first example embodiment of the present invention.
[Fig. 12] Fig. 12 illustrates examples of luminance measurement lines set on a grayscale image obtained by capturing a container to be inspected in the first example embodiment of the present invention.
[Fig. 13] Fig. 13 is a schematic diagram illustrating a method of calculating a floating object candidate area by the determination unit in the foreign object inspection device according to the first example embodiment of the present invention.
[Fig. 14] Fig. 14 is a block diagram of a foreign object inspection device according to a second example embodiment of the present invention.

### DESCRIPTION OF EMBODIMENTS

### [First Example Embodiment]

Next, a first example embodiment of the present invention will be described with reference to the drawings. First, the basic principle of determining that there is no foreign object on a liquid surface will be described. Hereinafter, it is assumed that a specific example of a foreign object floating on a liquid surface is a plastic piece. However, a foreign object floating on a liquid surface is not limited to a plastic piece.

In order to determine that there is no foreign object on a liquid surface, it is necessary to detect a liquid surface and confirm that there is no foreign object on the detected liquid surface.

### (1) Detection of liquid surface

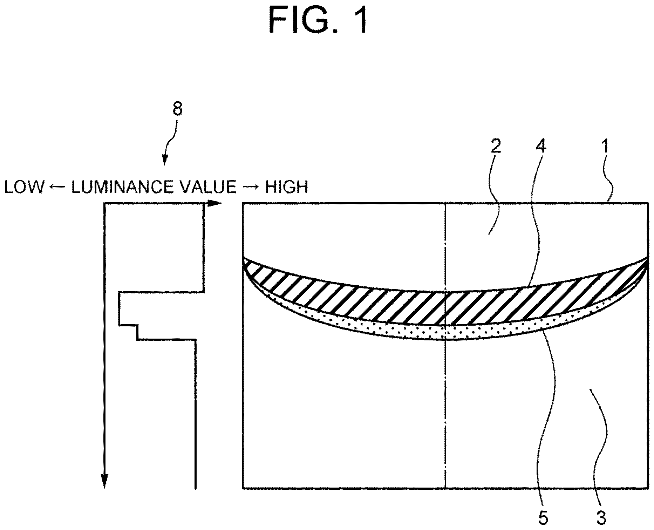

When a colorless and transparent liquid is put into a cylindrical transparent container and is rotated about the central axis at a given speed, a liquid surface in the shape of a paraboloid of revolution is formed. An image 1 obtained by capturing the vicinity of the liquid surface in the shape of a paraboloid of revolution with a camera from a lateral direction under the transmitted illumination is, for example, an image schematically illustrated in Fig. 1. Referring to Fig. 1, in a liquid surface region in the shape of a paraboloid of revolution in the image 1, a side close to an air layer 2 in the container forms a low luminance region 4 having a luminance value close to black, and a side close to a liquid layer 3 in a container 400 forms a high luminance region 5 that is close to white. In the high luminance region 5, the luminance value is sufficiently higher than that of the low luminance region 4, and is slightly lower than those of the air layer 2 and the liquid layer 3. It is considered that the low luminance region 4 is formed because the angle of inclination of the liquid surface becomes steeper toward the upper side of the paraboloid of revolution. By detecting such a low luminance region 4, it is possible to stably detect the liquid surface in the container.

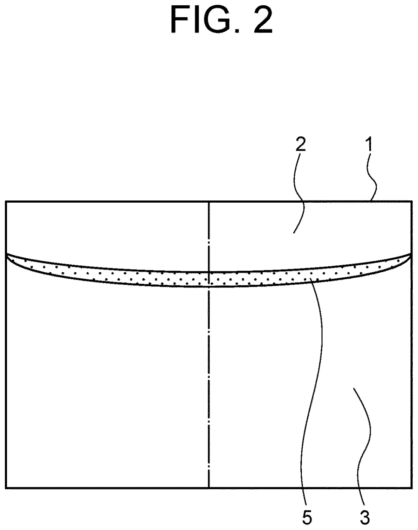

Meanwhile, when the speed of rotation of the transparent container becomes a predetermined value or lower, a liquid surface in the shape of a paraboloid of revolution is not formed. As a result, when the image 1 is obtained by capturing the transparent container under the same condition as that of Fig. 1, an image schematically illustrated in Fig. 2 is obtained. Referring to Fig. 2, a projection image of the liquid surface only includes the high luminance region 5, and the low luminance region 4 as illustrated in Fig. 1 is eliminated. Since the luminance value of the high luminance region 5 is close to that of the liquid layer 3, it is difficult to stable detect the liquid surface in the container on the basis of the high luminance region 5.

In view of the above, in the present embodiment, a liquid surface in the shape of a paraboloid of revolution is formed by rotating a transparent container containing a transparent liquid about the central axis at a given speed. Then, an image around the liquid surface in the shape of a paraboloid of revolution is acquired by capturing the transparent container in which the liquid surface in the shape of a paraboloid of revolution is formed, from a lateral direction under the transmitted illumination. Then, a liquid surface is detected by detecting the low luminance region 4 having a predetermined luminance value or lower from the image. As a result, it is possible to stably detect the liquid surface in the container.

### (2) Confirmation of no foreign object on the detected liquid surface

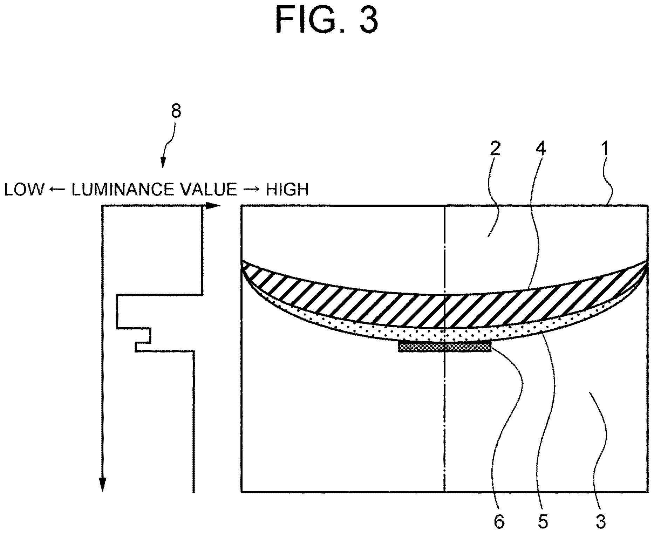

In the case where a plastic piece having a specific gravity smaller than that of a content liquid is floating on the liquid surface in a transparent container, when the transparent container is rotated about the central axis to form a liquid surface in the shape of a paraboloid of revolution, the plastic piece tends to come close to the center of the liquid surface in the shape of a paraboloid of revolution (near the central axis of the container). Therefore, when the image 1 is obtained by capturing the transparent container under the same condition as that of Fig. 1, an image schematically illustrated in Fig. 3 is obtained, for example. Referring to Fig. 3, a foreign object area 6 corresponding to a plastic piece is formed to be in contact with the high luminance region 5 in the vicinity of the center of the liquid surface in the shape of a paraboloid of revolution. In the foreign object area 6 corresponding to the plastic piece, the entire area has almost uniform luminance, and the luminance value is sufficiently higher than that of the low luminance region 4 and is lower than that of the high luminance region 5 to a distinguishable level.

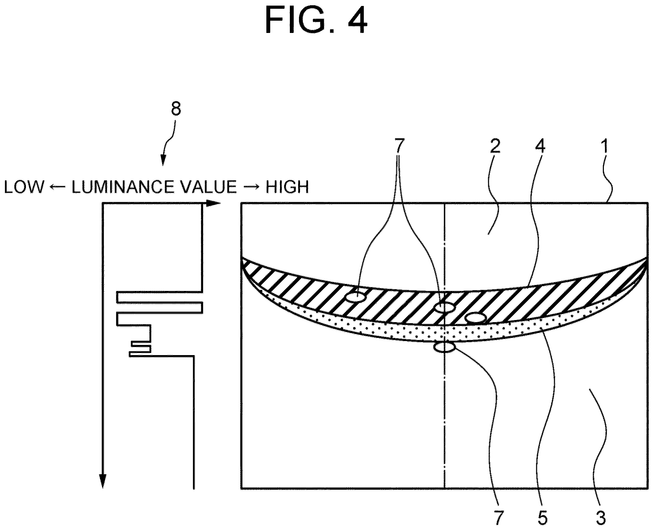

In the case where there is a bubble around the liquid surface in the shape of a paraboloid of revolution, it moves in synchronization with rotation of the container in a state where the bubble adheres to or does not adhere to the inner wall of the container. Therefore, when the image 1 is obtained by capturing the transparent container under the same condition as that of Fig. 1, an image schematically illustrated in Fig. 4 is obtained, for example. Referring to Fig. 4, bubble areas 7 corresponding to the bubbles are formed inside the low luminance region 4, at the lower end of the high luminance region 5, and elsewhere. The bubble area 7 is configured of a contour portion in a narrow or bold line and a hollow portion inside the contour portion, and has a shape of ring, doughnut, or the like. The luminance of the contour portion is low, and the luminance of the hollow portion is high.

The present embodiment acquires luminance values of pixels along a line extending in a direction parallel to the central axis of the container in the image of a liquid surface in the shape of a paraboloid of revolution as described above, generates one-dimensional data of the luminance values, and on the basis of a spatial change in the luminance values in the one-dimensional data, determines whether or not there is a foreign object on the liquid surface.

In Figs. 1, 3, and 4, one-dimensional data 8 of the luminance values of pixels acquired along the central axis of the container, in an image of a liquid surface in the shape of a paraboloid of revolution schematically illustrated therein, is also shown. Regarding the one-dimensional data 8 in Fig. 1 in which there is no foreign object or bubble on the liquid surface, referring to a change in the luminance values from the air layer 2 toward the liquid layer 3, the luminance largely drops at an edge part on the upper side of the low luminance region 4, and thereafter the luminance value never drops and reaches the luminance value of the liquid layer 3. On the other hand, referring to the one-dimensional data 8 in Fig. 3 in which a plastic piece is floating on the liquid surface, the luminance value drops at an edge part on the upper side of the foreign object area 6 corresponding to the plastic piece, and the luminance value rises at a part on the lower side. Moreover, referring to the one-dimensional data 8 in Fig. 4 in which there is a bubble on the liquid surface, in the bubble area existing in the low luminance region 4, the low luminance region 4 is divided by the hollow portion with high luminance and the luminance value drops. Further, in the bubble area 7 in contact with the lower end of the high luminance region 5, drop and rise of the luminance value occur at short intervals by the contour portions with high luminance. As described above, the feature of a spatial change in the luminance values in the one-dimensional data 8 when there is no foreign object or bubble on the liquid surface and the feature of a spatial change in the luminance value of the one-dimensional data 8 when there is a foreign object or/and a bubble on the liquid surface are clearly different.

Therefore, in the present embodiment, the feature of a spatial change in the luminance values in the one-dimensional data 8 as illustrated in Fig. 1 in which there is no foreign object or bubble on the liquid surface is registered in advance as a reference feature. Then, for an image from which one-dimensional data having a feature of a spatial change in the luminance values that matches the reference feature is obtained, the present embodiment determines that there is no foreign object on the liquid surface. Moreover, for an image of a change pattern having a feature of a spatial change in the luminance values that does not match the reference feature, that is, for an image having a feature shown in the one-dimensional data 8 illustrated in Fig. 3 or 4, the present embodiment determines that there is a possibility that a floating object (foreign object or/and bubble) is present on the liquid surface. Then, the present embodiment first computes a floating object candidate area where a floating object may be present, on the basis of the one-dimensional data not matching the reference feature. Then, the present embodiment determines whether the floating object candidate area is of a foreign object or a bubble, and on the basis of the determination result, determines whether or not there is a foreign object on the liquid surface.

The basic principle of the present embodiment to determine that there is no foreign object on a liquid surface is as described above. Next, a configuration and operation of the present embodiment will be described in detail with reference to the drawings.

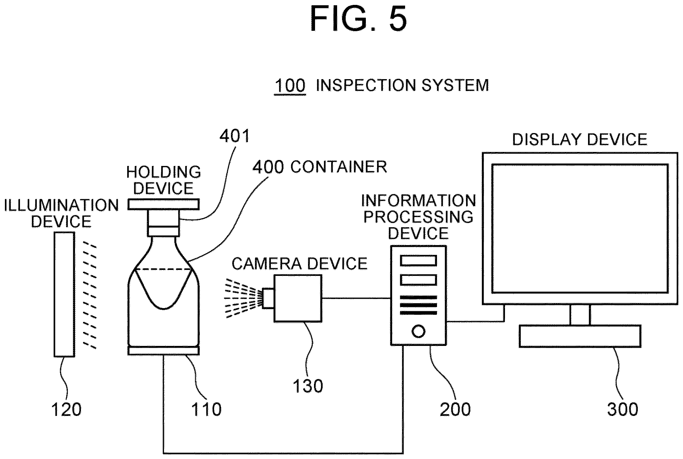

Fig. 5 is a block diagram of an inspection system 100 to which a foreign object inspection device according to a first example embodiment of the present invention is applied. Referring to Fig. 5, the inspection system 100 is a system for inspecting presence/absence of a foreign object on a liquid surface of a liquid contained in the container 400. The inspection system 100 includes a holding device 110, an illumination device 120, a camera device 130, a foreign object inspection device 200, and a display device 300, as main constituent elements.

The container 400 is a transparent or translucent container having a circular cross-section such as a glass bottle or a plastic bottle. The container 400 contains therein liquid pharmaceuticals (hereinafter referred to as a drug solution). On the liquid surface of the drug solution contained in the container 400, there is a possibility that a foreign object floats. A foreign object floating on a liquid surface is, for example, a plastic piece. The container 400 is a syringe previously filled with a drug solution, for example. However, the container 400 to be inspected is not limited to a syringe. The container 400 may be a vial or an ampule in which a drug solution is contained. Moreover, the container 400 is not limited to a container containing a drug solution, and it may be a container containing drinking water.

The holding device 110 is configured to hold the container 400 in an upright posture. For example, in the case of a syringe, the holding device 110 holds the syringe in an upright posture with the nozzle side being the upper side. Any mechanism may be used for holding the container 400 in an upright posture. For example, the holding mechanism may be configured to include a pedestal on which the container 400 is placed in an upright posture, a member that presses a top surface of a vertex portion 401 of the container 400 placed on the pedestal, and the like.

The holding device 110 is configured to rotate the container 400 about the central axis while holding the container 400. Any mechanism may be used for rotating the container 400. For example, the mechanism for rotation may be configured to include a motor that rotates the entire holding mechanism in a state of holding the container 400.

The holding device 110 is connected with the foreign object inspection device 200 in a wired or wireless manner. When the holding device 110 is activated by an instruction from the foreign object inspection device 200, the holding device 110 rotates the container 400 about the central axis in an upright posture while being held. Further, the holding device 110 stops operation of rotating the container 400 in response to a stop instruction from the foreign object inspection device 200.

When the container 400 is rotated at a given speed as described above, the liquid in the container 400 flows and a liquid surface in the shape of a paraboloid of revolution is formed. In the case where a foreign object such as a plastic piece is floating on the liquid surface of the container 400, when the container 400 is rotated and a liquid surface in the shape of a paraboloid of revolution is formed, the foreign object such as a plastic piece tends to move to the central portion of the liquid surface in the shape of a paraboloid of revolution. Moreover, a bubble existing near the liquid surface before the rotation and a bubble generated near the liquid surface by the rotation move near the liquid surface in synchronization with the rotation. Accordingly, the foreign object inspection device 200 inspects whether or not there is any floating object on the liquid surface in the shape of a paraboloid of revolution, and when there is any, identifies whether the floating object is a foreign object or a bubble.

The illumination device 120 is configured to irradiate the liquid contained in the container 400 with illumination light. For example, the illumination device 120 is a surface light source in a size corresponding to the size of the container 400. The illumination device 120 is disposed on the side opposite to the side where the camera device 130 is disposed when viewed from the container 400. That is, illumination provided by the illumination device 120 is transmitted illumination.

The camera device 130 is a high-speed camera that images a liquid in the container 400 from a direction opposite to the side where the illumination device 120 is installed when viewed from the container 400. The video rate of the camera device 130 may be about 160 fps, for example. However, the video rate of the camera device 130 may be other than that described above. Further, the camera device 130 may be a black and white camera equipped with a charge-coupled device (CCD) image sensor or a complementary MOS (CMOS) image sensor having a pixel capacity of about several millions pixels, and outputs a grayscale image representing one pixel in eight bits, for example. However, the camera device 130 may be a color camera. Moreover, the level of a luminance value of the grayscale image is not limited to 256 gradations, and more or less gradations are also acceptable. The camera device 130 is connected with the foreign object inspection device 200 in a wired or wireless manner. The camera device 130 transmits the captured time-series images to the foreign object inspection device 200, together with information indicating the capturing time and the like.

The display device 300 is a display device such as a liquid crystal display (LCD). The display device 300 is connected with the foreign object inspection device 200 in a wired or wireless manner. The display device 300 displays the results of inspection and the like of the container 400 performed by the foreign object inspection device 200.

The foreign object inspection device 200 is configured to perform image processing on the time-series images captured by the camera device 130, and inspect presence or absence of a foreign object floating on the liquid surface of the liquid contained in the container 400. The foreign object inspection device 200 is connected with the holding device 110, the camera device 130, and the display device 300 in a wired or wireless manner.

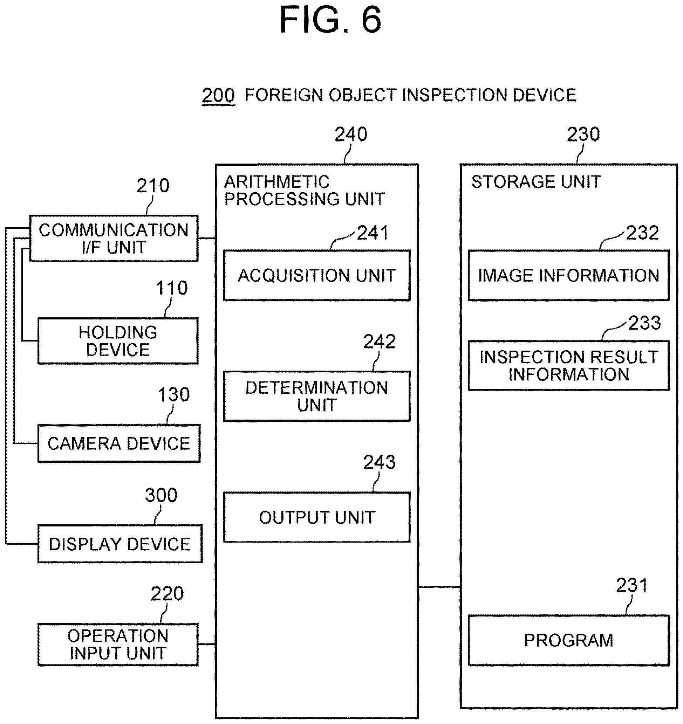

Fig. 6 is a block diagram illustrating an example of the foreign object inspection device 200. Referring to Fig. 6, the foreign object inspection device 200 includes a communication I/F unit 210, an operation input unit 220, a storage unit 230, and an arithmetic processing unit 240.

The communication I/F unit 210 is configured of a data communication circuit, and is configured to perform data communication with the holding device 110, the camera device 130, the display device 300, and other external devices not illustrated, in a wired or wireless manner. The operation input unit 220 is configured of operation input devices such as a keyboard and a mouse, and is configured to detect operation by an operator and output it to the arithmetic processing unit 240.

The storage unit 230 is configured of one or more storage devices of one or a plurality of types such as a hard disk and a memory, and is configured to store therein processing information necessary for various types of processing performed in the arithmetic processing unit 240 and a program 231. The program 231 is a program for implementing various processing units by being read and executed by the arithmetic processing unit 240, and is read in advance from an external device or a storage medium, not illustrated, via a data input-output function of the communication I/F unit 210 and is stored in the storage unit 230. The main processing information to be stored in the storage unit 230 includes image information 232 and inspection result information 233.

The image information 232 includes time-series images obtained by sequentially capturing the liquid in the container 400 with the camera device 130. In the case where there is a floating object in the liquid in the container 400, an image of the floating object is shown in the image information 232.

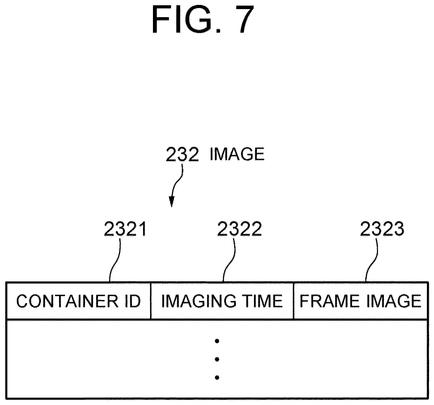

Fig. 7 illustrates a configuration example of the image information 232. The image information 232 of this example is configured of an entry consisting of a set of a container ID 2321, imaging time 2322, and a frame image 2323. In the field of the container ID 2321, an ID uniquely identifying the container 400 is set. As the container ID 2321, a serial number assigned to the container 400, a barcode attached to the container 400, object fingerprint information taken from a cap of the container 400, or the like may be used. In the fields of the imaging time 2322 and the frame image 2323, the imaging time and a frame image are set, respectively. The imaging time 2322 is set to have precision (for example, millisecond units) with which a frame image can be identified by being distinguished from other frame images having the same container ID. The frame image 2323 is a grayscale image in which one pixel is represented in eight bits. In the example of Fig. 7, the container ID 2321 is associated with each frame image 2323. However, the container ID 2321 may be associated with each group consisting of a plurality of frame images 2323.

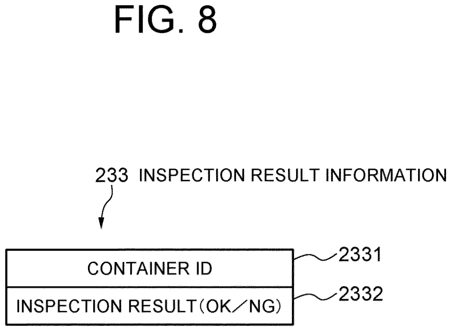

The inspection result information 233 is information about a result of inspecting presence or absence of a foreign object in the liquid contained in the container 400 to be inspected. Fig. 8 illustrates a configuration example of the inspection result information 233. The inspection result information 233 of this example is configured of a set of a container ID 2331 and an inspection result 2332. In the entry of the container ID 2331, an ID uniquely identifying the container 400 to be inspected is set. In the entry of inspection result 2332, an inspection result of either OK (inspection pass) or NG (inspection failure) is set. The inspection result indicating OK is output when there is no foreign object in the liquid contained in the container 400 identified with the container ID, for example. On the other hand, the inspection result indicating NG is output when there is one or more foreign objects.

Referring to Fig. 6 again, the arithmetic processing unit 240 includes a microprocessor such as an MPU and peripheral circuits thereof, and is configured to read and execute the program 231 from the storage unit 230 to allow the hardware and the program 231 to cooperate with each other to thereby implement the various processing units. The main processing units implemented by the arithmetic processing unit 240 include an acquisition unit 241, a determination unit 242, and an output unit 243.

The acquisition unit 241 controls the holding device 110 to rotate the container 400 containing a transparent liquid about the central axis at a given speed to thereby form a liquid surface in the shape of a paraboloid of revolution. The acquisition unit 241 also controls the camera device 130 to continuously image the container 400 in which the liquid surface in the shape of a paraboloid of revolution is formed, from a side of the container 400 under the transmitted illumination by the illumination device 120. The acquisition unit 241 also acquires a plurality of grayscale images around the liquid surface in the shape of a paraboloid of revolution obtained from continuous imaging, and stores them in the storage unit 230 as image information 232.

The determination unit 242 reads the image information 232 from the storage unit 230, and determines whether or not there is a foreign object on the liquid surface for each grayscale image around the liquid surface in the shape of a paraboloid of revolution represented by the image information 232. For example, the determination unit 242 acquires a luminance value of a pixel along each of the lines extending in a direction parallel to the central axis of the container 400 in the grayscale image, and generates one-dimensional data of the luminance values for each line. Then, the determination unit 242 determines whether or not there is a foreign object on the liquid surface, on the basis of a spatial change in the luminance values in the one-dimensional data for each line. Specifically, the determination unit 242 compares a spatial change in the luminance values in the one-dimensional data with a change in the luminance values when there is no floating object on the liquid surface, and when they match, determines that there is no foreign object on the liquid surface. On the contrary, when they do not match, the determination unit 242 computes a floating object candidate area where there is a possibility that a floating object is present on the basis of a spatial change in the luminance values in the one-dimensional data, and recognizes the floating object from the floating object candidate area, and determines whether the recognized floating object is a foreign object or a bubble. The determination unit 242 repeats the above-described processing on all grayscale images obtained from the same container 400 included in the image information 232. Then, the determination unit 242 creates the inspection result information 233 on the basis of a result of determination on all grayscale images, and stores it in the storage unit 230.

The output unit 243 reads the inspection result information 233 from the storage unit 230, displays it on the screen of the display device 300 via the communication I/F unit 210, or/and outputs it to an external device not illustrated.

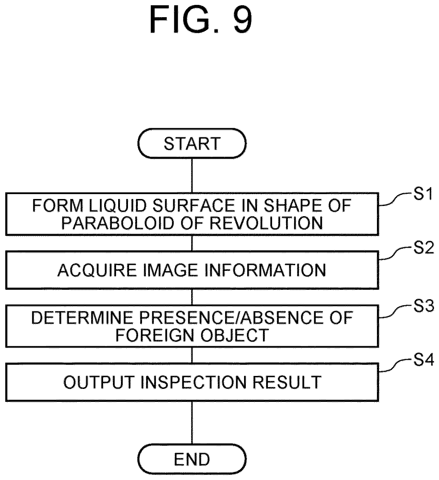

Next, operation of the inspection system 100 will be described. Fig. 9 is a flowchart illustrating an example of an operation of inspecting presence or absence of a foreign object in the liquid contained in the container 400 to be inspected.

Referring to Fig. 9, the acquisition unit 241 first controls the holding device 110 to rotate the container 400 containing a transparent liquid about the central axis at a given speed to thereby form a liquid surface in the shape of a paraboloid of revolution (step S 1). Then, the acquisition unit 241 controls the camera device 130 to image the container 400 in which a liquid surface in the shape of a paraboloid of revolution is formed, from a side of the container 400 under the transmitted illumination by the illumination device 120 and acquires a plurality of grayscale images around the liquid surface in the shape of a paraboloid of revolution, and stores them in the storage unit 230 as the image information 232 (step S2).

Then, the determination unit 242 reads the image information 232 from the storage unit 230, and for each grayscale image, acquires a luminance value of a pixel along each of the lines extending in a direction parallel to the central axis, and generates one-dimensional data of the luminance values of the pixels for each line (step S3). Further, on the basis of a spatial change in the luminance values in the one-dimensional data generated for each grayscale image and each line at step S3, the determination unit 242 determines whether or not there is a foreign object on the liquid surface, and creates the inspection result information 233 representing the determination result and stores it in the storage unit 230. Then, the output unit 243 reads the inspection result information 233 from the storage unit 230, displays it on the screen of the display device 300 via the communication I/F unit 210, or/and outputs it to an external device not illustrated (step S4).

Next, the acquisition unit 241 and the determination unit 242 will be described in detail.

First, the details of the acquisition unit 241 will be described.

The acquisition unit 241 first activates the holding device 110 holding the container 400 in an upright posture to rotate the container 400 about the central axis at a rotational speed of a given speed, that is, about 100 to 200 rotations/minute, and forms a liquid surface in the shape of a paraboloid of revolution in the container 400. The given speed may be 100 to 200 rotations/minute, for example. However, a rotational speed necessary for forming a liquid surface in the shape of a paraboloid of revolution differs depending on the viscosity of the contained liquid. Therefore, it is desirable to check the rotational speed at which a liquid surface in the shape of a paraboloid of revolution is formed through a previous test. In addition, when the rotational speed of the container 400 varies, the liquid surface in the shape of a paraboloid of revolution varies. Therefore, it is desirable that the rotational speed of the container 400 is a predetermined constant speed.

Then, the acquisition unit 241 continuously images the rotating container 400 with the camera device 130 under the transmitted illumination by the illumination device 120. For example, in the case where the frame rate of the camera device 130 is 160 fps for example, when the camera device 130 continuously images it for 0.5 seconds for example, 80 pieces of grayscale images are acquired. By continuously capturing a plurality of images of the rotating container 400 in this way, it is possible to image a foreign object floating on the liquid surface in different postures. Therefore, it is possible to prevent a foreign object from being overlooked. Note that the number of images to be acquired is determined based on a tradeoff between the inspection accuracy and the processing speed.

Then, the acquisition unit 241 performs an image stabilization process such as elimination of flickers on each of the acquired grayscale images, and then cuts out an image around the liquid surface in the shape of a paraboloid of revolution and stores it in the storage unit 230 as the image information 232.

As described above, the acquisition unit 241 acquires a plurality of grayscale images around the liquid surface in the shape of a paraboloid of revolution as schematically illustrated in Figs. 1, 3, and 4, and stores them in the storage unit 230.

Next, the details of the determination unit 242 will be described.

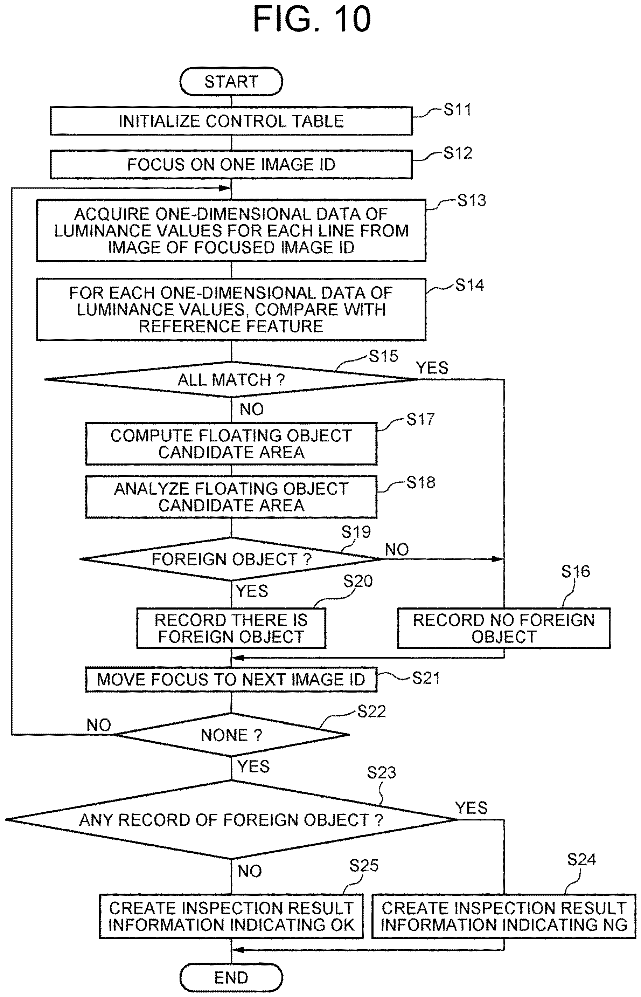

Fig. 10 is a flowchart illustrating an example of processing performed by the determination unit 242. Referring to Fig. 10, the determination unit 242 first initializes a control table 500 used for determination processing (step S11).

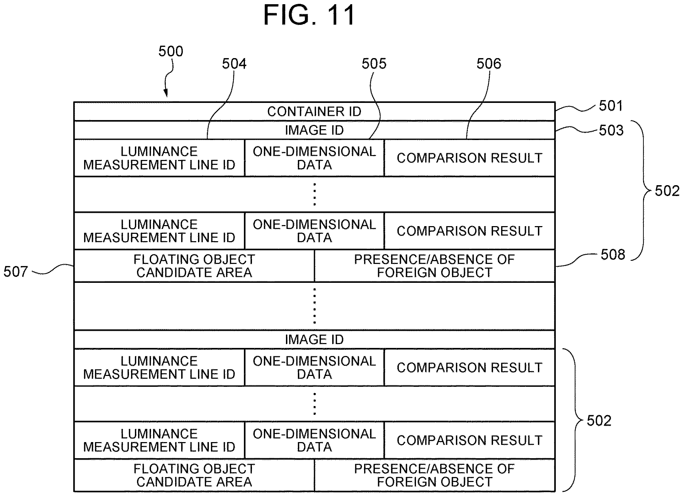

Fig. 11 illustrates a format example of the control table 500. The control table 500 of this example is configured of a container ID 501 and image analysis information 502. In the field of the container ID 501, an ID of the container 400 to be inspected (container ID 2331) is set. The number of pieces of the image analysis information 502 to be set is the same as the number of grayscale images acquired by imaging the container 400 to be inspected.

Each piece of the image analysis information 502 is configured of an image ID 503, a luminance measurement line ID 504, one-dimensional data 505, a comparison result 506, a floating object candidate area 507, and presence/absence of foreign object 508. In the field of the image ID 503, an ID of a grayscale image (for example, imaging time 2322) is set. There are a plurality of sets of the luminance measurement line ID 504, the one-dimensional data 505, and the comparison result 506. In the field of the luminance measurement line ID 504, an ID of a line in which the luminance value of a pixel on the grayscale image is measured is set. In the field of the one-dimensional data 505, one-dimensional data of a luminance value of a pixel acquired along the line specified by the luminance measurement line ID 504 of the same set is set. In the field of the comparison result 506, a result of comparing the feature of a spatial change in the luminance value in the one-dimensional data 505 in the same set with the previously registered reference feature is set.

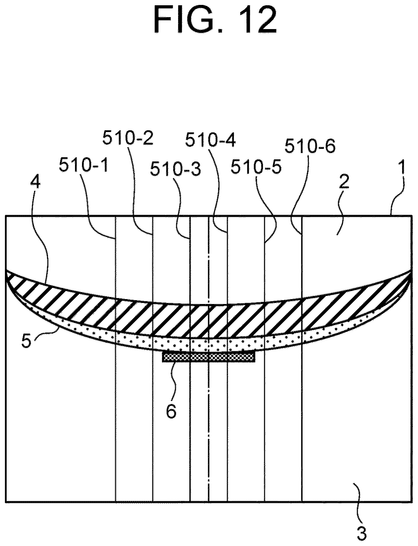

Fig. 12 illustrates examples of luminance measurement lines 510-1 to 510-6 set on a grayscale image obtained by imaging the container 400 to be inspected. Each of the luminance measurement line 510-1 to 510-6 has a width W of one pixel, and extends in a direction parallel to the central axis of the container 400 from the upper end (air layer 2 side) to the lower end (liquid layer 3 side) on the image 1. The luminance measurement lines 510-1 to 510-6 are disposed at intervals of the width of the number of pixels H. The number of pixels H is determined according to the minimum foreign object diameter desired to be detected. That is, as the width of the intervals between the luminance measurement lines 510-1 to 510-6 is narrow, a smaller foreign object can be detected. The intervals between the luminance measurement lines 510 may be the same for the entire luminance measurement lines or different from each other. For example, in a location near the central axis, the interval may be narrower than that in a farther location. Moreover, in the example illustrated in Fig. 12, the luminance measurement lines 510-1 to 510-6 are set only around the center of the container 400 where foreign objects gather. However, the luminance measurement lines may be set not only near the center of the container 400 but also in a location near the side surface of the container 400. Each of the luminance measurement lines 510-1 to 510-6 is applied with an ID for uniquely identifying it.

Referring to Fig. 11 again, in the floating object candidate area 507, an image of an area having a possibility that there is a floating object (foreign object or bubble) in the grayscale image is set. In the presence/absence of the foreign object 508, information of presence/absence of a foreign object is set on the basis of a result of analyzing the floating object candidate area 507.

In the initialization step S11 of the control table 500 in Fig. 10, the determination unit 242 sets the ID of the container 400 to be inspected in the container ID 501 of the control table 500, reads the image information 232 of the container 400 to be inspected from the storage unit 230, sets the container ID 2321 of the image information 232 in the container ID 501 of the control table 500, and sets the imaging time 2322 of the frame image in the image ID 503. Moreover, at the initialization step S11, the determination unit 242 sets the ID of the luminance measurement line 510 in the luminance measurement line ID of the control table 500, and initializes the fields of the one-dimensional data 505, the comparison result 506, the floating object candidate area 507, and the presence/absence of a foreign object 508 to NULL value.

Upon completion of initialization of the control table 500, the determination unit 242 focuses on one image ID 503 (for example, top image ID 503) set in the control table 500 (step S11). Then, for each luminance measurement line ID 504 from the grayscale image identified by the focused image ID 503, the determination unit 242 acquires a luminance value of a pixel along the luminance measurement lines 510-1 to 510-6 and creates the one-dimensional data 505 (step S13). For example, the determination unit 242 creates the one-dimensional data 505 by sequentially acquiring the luminance value of a pixel of the grayscale image along one luminance measurement line from the air layer 2 side one by one, and aligning the acquired luminance values of the pixels in the acquired sequence in a line. Instead of storing the created one-dimensional data as it is in the control table 500, the determination unit 242 may store one-dimensional data obtained by performing smoothing on the created one-dimensional data in the control table 500.

Then, for each piece of the one-dimensional data 505, the determination unit 242 compares the feature of a spatial change in the luminance values of the pixels in the one-dimensional data 505 with the reference feature, and stores the comparison result 506 showing whether or not the feature of the one-dimensional data 505 matches the reference feature (step S14). The reference feature is previously created based on the one-dimensional data of the case where there is no foreign object and bubble on the liquid surface, and stored previously. The reference feature has a feature that after the luminance value of a pixel largely drops in the boundary part between the air layer 2 and the low luminance region 4, the luminance value of a pixel never drops thereafter until it reaches the liquid layer 3. Accordingly, the determination unit 242 scans the luminance value of a pixel from the top (air layer side) of the one-dimensional data 505, and detects a part where the luminance value of a pixel drops to a value equal to or smaller than a predetermined threshold as a boundary between the air layer 2 and the low luminance region 4 (that is, liquid surface). Then, after the detected boundary, when the luminance value of a pixel never drops from the luminance value of the pixel immediately before it until the end of the one-dimensional data 505, the determination unit 242 determines that the one-dimensional data 505 matches the reference feature. On the other hand, after the boundary, when there is at least one part where the luminance value of a pixel in the one-dimensional data 505 drops from the luminance value of the pixel immediately before it, the determination unit 242 determines that the one-dimensional data 505 does not match the reference feature.

Then, the determination unit 242 determines whether or not every one-dimensional data 505 matches the reference feature (step S15). Then, when every one-dimensional data 505 matches the reference feature, the determination unit 242 records that there is no foreign object in the field of the presence/absence of foreign object 508 corresponding to the focused image ID 503 (step S16). Then, the determination unit 242 proceeds to step S21.

On the other hand, when at least one piece of one-dimensional data 505 does not match the reference feature, the determination unit 242 computes the floating object candidate area 507 (step S 17).

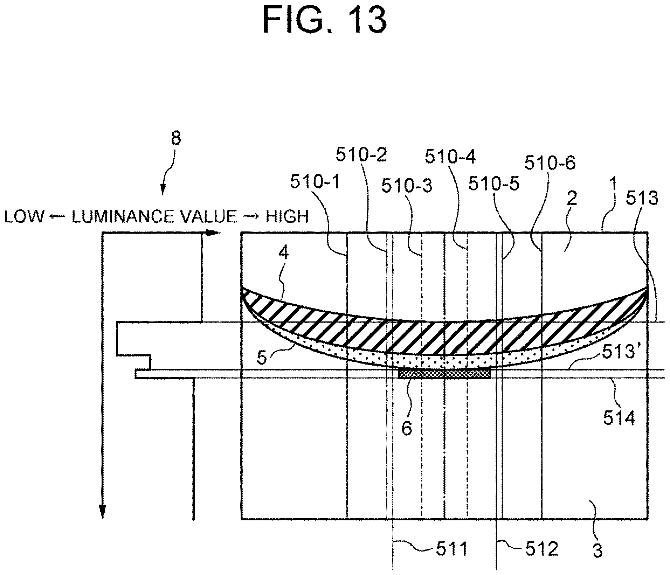

Fig. 13 is a schematic diagram illustrating an example of a method of computing the floating object candidate area 507. In Fig. 13, among the luminance measurement lines 510, one in which the one-dimensional data 505 matches the reference feature is shown by a solid line and one in which the one-dimensional data 505 does not match is shown by a broken line. The determination unit 242 draws a parallel line separating by a certain distance ΔH on the left side of the luminance measurement line 510-3 located at the leftmost end of the luminance measurement lines 510-3 and 510-4 not matching the reference feature, and determines that the parallel line is a left boundary line 511 of the floating object candidate area 507. The determination unit 242 also draws a parallel line separating by a certain distance ΔH on the right side of the luminance measurement line 510-4 located at the rightmost end of the luminance measurement lines 510-3 and 510-4 not matching the reference feature, and determines that the parallel line is a right boundary line 512 of the floating object candidate area 507. The certain distance ΔH may be the same as the interval H between the luminance measurement lines, for example.

Moreover, the determination unit 242 determines an upper boundary line 513 of the floating object candidate area 507 as described below. First, the determination unit 242 detects a boundary between the air layer 2 and the low luminance region 4 from the one-dimensional data 505 not matching the reference feature. When there are a plurality of pieces of one-dimensional data 505 not matching the reference feature, the determination unit 242 detects a boundary that is present on the uppermost side among the respective boundaries detected therefrom. Then, the determination unit 242 draws a line passing through the detected boundary and intersecting the central axis of the container 400, and determines the line as the upper boundary line 513 of the floating object candidate area 507.

Furthermore, the determination unit 242 determines a lower boundary line 514 of the floating object candidate area 507 as described below. First, the determination unit 242 scans the luminance value of the pixel of the one-dimensional data 505 not matching the reference feature from the last (liquid layer side) to the top, and detects a part where the luminance value of the pixel drops by a certain value ΔL or more for the first time, as a lower boundary. Here, ΔL is determined in advance based on the difference in the luminance values of the pixels between the liquid layer 3 and the floating object. When there are a plurality of pieces of one-dimensional data 505 not matching the reference feature, the determination unit 242 detects a lower boundary that is present on the lowermost side among the respective lower boundaries detected therefrom. Then, the determination unit 242 draws a line passing through the detected lower boundary and intersecting the central axis of the container 400, and determines the line as the lower boundary line 514 of the floating object candidate area 507.

The determination unit 242 determines an area surrounded by the left boundary line 511, the right boundary line 512, the upper boundary line 513, and the lower boundary line 514 determined as described above, to be the floating object candidate area 507. By determining the floating object candidate area 507 on the basis of the one-dimensional data 505 not matching the reference feature, it is possible to reduce the size of the floating object candidate area 507 compared with the case of handling the entire area around the liquid surface as the floating object candidate area, and accordingly, to reduce the processing amount to check a foreign object and a bubble from the floating object candidate area 507.

Note that the method of determining the floating object candidate area 507 on the basis of the one-dimensional data 505 not matching the reference feature is not limited to that described above. For example, it is possible to detect an upper end and a lower end of a foreign object or a bubble from a spatial change in the luminance value of a pixel in the one-dimensional data 505, and determine the lines passing through the detected upper end and lower end and intersecting the central axis of the container 400 to be the upper boundary line 513 and the lower boundary line 514. With such a method, in the example of Fig. 13, an upper boundary line 513' is determined instead of the upper boundary line 513, for example.

Referring to Fig. 10 again, upon determination of the floating object candidate area 507, the determination unit 242 analyzes the floating object candidate area 507 to determine whether the floating object that is present in the floating object candidate area 507 is a foreign object or a bubble (step S18). This determination is performed as described below for example.

The determination unit 242 first recognizes the floating object area from the floating object area candidate area 507 in the grayscale image of the focused image ID. A foreign object or a bubble in the liquid layer 3 and the high luminance region 5 appear as a group of low luminance pixels, compared with the liquid layer 3 and the high luminance region 5. Therefore, the determination unit 242 recognizes an area where low luminance pixels are distributed continuously in the certain number of pixels or more in the liquid layer 3 and the high luminance region 5, as one floating object area. Further, a foreign object or a bubble in the low luminance region 4 appears as a group of high luminance pixels, compared with the low luminance region 4. Therefore, the determination unit 242 recognizes an area where high luminance pixels are distributed continuously in the certain number of pixels or more in the low luminance region 4, as one floating object area.

Then, for each floating object area, the determination unit 242 determines whether the area is a foreign object or a bubble, on the basis of the feature of the shape. For example, a bubble in the liquid layer 3 and the high luminance region 5 has a hollow shape configured of a linear contour portion and a hollow portion in the contour portion, while it is an extremely rare case where a foreign object appears in a hollow shape. Moreover, since a bubble in the low luminance region 4, the liquid layer 3, and the high luminance region 5 is a hollow ball-shaped body, it is an extremely rare case where a bubble appears in a shape that is flat at a certain level or more or a shape that is inclined at a certain level or more. On the other hand, it is highly likely that a plastic piece that is a foreign object appears in a relatively large and flat shape. Moreover, while a foreign object tends to appear in a shape in which the part near the center of gravity thereof is relatively opaque, it is extremely rare that a bubble appears in a shape in which the part near the center of gravity thereof is opaque at a certain level or more. On the basis of such features of the shape, the determination unit 242 determines whether the floating object area represents a foreign object or a bubble.

In the case where at least one floating object area is determined to represent a foreign object, the determination unit 242 records that there is a foreign object in the field for the presence/absence of foreign object 508 corresponding to the focused image ID 503 in the control table 500 (steps S19, S20). On the other hand, in the case where all floating object areas are determined to represent bubbles, the determination unit 242 records that there is no foreign object in the field for the presence/absence of foreign object 508 corresponding to the focused image ID 503 in the control table 500 (steps S16). Then, the determination unit 242 proceeds to step S21.

At step S21, the determination unit 242 moves the focus to the next image ID 503 in the control table 500. Then, the determination unit 242 returns to step S13 via step S22, and repeats the same processing as that described above on the grayscale image of the newly focused image ID 503. Then, upon completion of focusing on all image IDs 503 in the control table 500 (YES at step S22), the determination unit 243 proceeds to step S23.

At step S23, the determination unit 242 checks all fields for the presence/absence of foreign object 508 in the control table 500, and when it is recorded that there is a foreign object in at least one presence/absence of foreign object 508, the determination unit 242 creates the inspection result information 233 indicating NG, and stores it in the storage unit 230 (step S24). Meanwhile, when it is recorded that there is no foreign object in all fields for the presence/absence of foreign object 508, the determination unit 242 creates the inspection result information 233 indicating OK, and stores it in the storage unit 230 (step S25). Then, the determination unit 242 ends the processing of Fig. 10.

Examples of the detailed configuration and operation of the determination unit 242 are as described above. However, the configuration and the operation of the determination unit 242 are not limited to those described above. For example, the determination unit 242 may be configured and operate as described below.

In the example described above, with respect to one grayscale image, the determination unit 242 creates one-dimensional data through acquisition of luminance values of pixels, compares the one-dimensional data with the reference feature, computes a floating object candidate area when the one-dimensional data does not match the reference feature, and analyzes the floating object candidate area, and then repeats the same processing on the next grayscale image. However, as another example, with respect to all or a group of grayscale images, the determination unit 242 creates one-dimensional data through acquisition of luminance values of pixels, compares the one-dimensional data with the reference feature, and computes a floating object candidate area when the one-dimensional data does not match the reference feature, and then, computes an area by logical OR operation from the computed one or all of the two or more floating object candidate areas, as a final floating object candidate area. Then, the determination unit 242 performs analysis of the floating object candidate areas on all grayscale images that do not match the reference feature, by commonly using the final floating object candidate area. With this operation, it is possible to extremely decrease the probability that a foreign object is present in an area other than the floating object candidate area. Moreover, in order to simplify the processing, analysis of a floating object candidate area may be performed on some of all grayscale images that do not match the reference feature, by commonly using the final floating object candidate area.

Further, while the same processing is repeated on all grayscale images corresponding to an container ID in the above example, at the point of time when a foreign object is detected from at least one grayscale image, it is possible to omit the processing to be performed on the rest of the grayscale images, immediately create inspection result information indicating NG, and end the processing of Fig. 10.

Furthermore, while the luminance measurement line 510 whose lateral width is one pixel is used in the above example, a luminance measurement line whose lateral width is two pixels or more may be used. In that case, a luminance average value may be calculated for each set of two or more pixels continuing in the lateral direction, and create one-dimensional data by aligning the average values.

As described above, according to the present embodiment, it is possible to stably determine that there is no foreign object on a liquid surface. One of the reasons is that the present embodiment includes the acquisition unit 241 that acquires the image 1 around a liquid surface in the shape of a paraboloid of revolution. The image 1 is obtained by capturing, with the camera device 130, the transparent container 400 in which the liquid surface in the shape of a paraboloid of revolution is formed by being rotated about the central axis at a given speed in a state of containing a transparent liquid, from a side of the container under the transmitted illumination. Another reason is that the present embodiment includes the determination unit 242 that acquires luminance values of pixels along a line extending in a direction parallel to the central axis of the container 400 in the image, generates one-dimensional data of the luminance values, and on the basis of a spatial change in the luminance values in the one-dimensional data, determines whether or not there is a foreign object on the liquid surface.

On the other hand, in the art related to the present invention, when a liquid surface is a completely flat surface, the liquid surface is imaged as a uniform white region, and a foreign object floating on the liquid surface is captured as a blackish image according to the reflection coefficient thereof. However, even in a state where the transparent container is completely stationary, the liquid surface is not completely flat due to a meniscus. In a transparent container with a small inner diameter, such a phenomenon is particularly notable. Moreover, due to the structure of an inspection stage on which a transparent container is placed or noise environment of the inspection location, fine vibration may be caused in the transparent container during imaging and a ripple may be generated on the liquid surface during imaging. As described above, a liquid surface is not imaged as a uniform white region unless it is completely flat, and a blackish area that is hard to be distinguished from an image of a foreign object appears. Accordingly, it is difficult to stably determine that there is no foreign object on the liquid surface.

### [Second Example Embodiment]

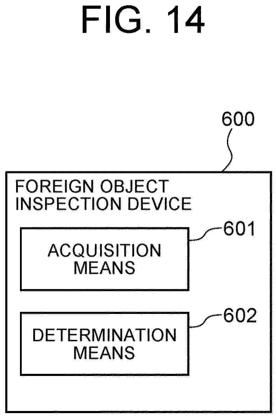

Next, a foreign object inspection device according to a second exemplary embodiment of the present invention will be described. Fig. 14 is a block diagram illustrating a foreign object inspection device 600 according to the present embodiment.

Referring to Fig. 13, the foreign object inspection device 600 includes an acquisition means 601 and a determination means 602.

The acquisition means 601 is configured to acquire an image around a liquid surface in the shape of a paraboloid of revolution of a transparent container. The liquid surface in the shape of a paraboloid of revolution is formed by rotating the container, containing a transparent liquid, about the central axis at a given speed. The image is obtained by capturing the transparent container from a side of the transparent container under the transmitted illumination. The acquisition means 601 may have the same configuration as that of the acquisition unit 241 of Fig. 6 for example, but is not limited thereto.

The determination means 602 is configured to acquire a luminance value of a pixel along a line extending in a direction parallel to the central axis in the image acquired by the acquisition means 601, generate one-dimensional data of the luminance values, and on the basis of a spatial change in the luminance values in the one-dimensional data, determine whether or not there is a foreign object on the liquid surface. The determination means 602 may have the same configuration as that of the determination unit 242 of Fig. 6 for example, but is not limited thereto.

The foreign object inspection device 600 configured as described above operates as described below. First, the acquisition means 601 acquires an image around a liquid surface in the shape of a paraboloid of revolution of a transparent container. The liquid surface in the shape of a paraboloid of revolution is formed by rotating the container, containing a transparent liquid, about the central axis at a given speed. The image is obtained by capturing the transparent container from a side of the transparent container under the transmitted illumination. Then, the determination means 602 acquires a luminance value of a pixel along a line extending in a direction parallel to the central axis in the image acquired by the acquisition means 601, generates one-dimensional data of the luminance values, and on the basis of a spatial change in the luminance values in the one-dimensional data, determines whether or not there is a foreign object on the liquid surface.

According to the foreign object inspection device 600 that is configured and operates as described above, it is possible to stably determine that there is no foreign object on a liquid surface. One of the reasons is that the foreign object inspection device 600 includes the acquisition means 601 that acquires an image around a liquid surface in the shape of a paraboloid of revolution of a transparent container. The liquid surface in the shape of a paraboloid of revolution is formed by rotating the container, containing a transparent liquid, about the central axis at a given speed. The image is obtained by capturing the transparent container from a side of the transparent container under the transmitted illumination. Another reason is that the foreign object inspection device 600 includes the determination means 602 that acquires a luminance value of a pixel along a line extending in a direction parallel to the central axis of the transparent container in the image, generates one-dimensional data of the luminance values, and on the basis of a spatial change in the luminance values in the one-dimensional data, determines whether or not there is a foreign object on the liquid surface.

While the present invention has been described with reference to the exemplary embodiments described above, the present invention is not limited to the above-described embodiments. The form and details of the present invention can be changed within the scope of the present invention in various manners that can be understood by those skilled in the art.

### INDUSTRIAL APPLICABILITY

The present invention is applicable to inspection of confirming whether or not there is a foreign object such as plastic piece on a liquid surface of drug solution contained in a container such as a syringe.

The whole or part of the exemplary embodiments disclosed above can be described as, but not limited to, the following supplementary notes.

### (Supplementary Note 1)

A foreign object inspection device comprising:
acquisition means for acquiring an image around a liquid surface in a shape of a paraboloid of revolution in a transparent container, the liquid surface in the shape of a paraboloid of revolution being formed when the transparent container containing a transparent liquid is rotated about a central axis at a given speed, the image being captured from a side of the transparent container under transmitted illumination; and
determination means for acquiring a luminance value of a pixel along a line extending in a direction parallel to the central axis in the image, generating one-dimensional data of the luminance values, and on a basis of a spatial change in the luminance values in the one-dimensional data, determining whether or not there is a foreign object on the liquid surface.

### (Supplementary Note 2)

The foreign object inspection device according to Claim 1, wherein
the determination means sets a plurality of the lines at a predetermined interval, generates the one-dimensional data for each of the lines, and performs the determination on a basis of a spatial change in the luminance values in the one-dimensional data for each of the lines.

### (Supplementary Note 3)

The foreign object inspection device according to supplementary note 1 or 2, wherein
the determination means compares the spatial change in the luminance values in the one-dimensional data with a change in luminance values when there is no floating object on the liquid surface, and performs the determination on a basis of a result of the comparison.

### (Supplementary Note 4)

The foreign object inspection device according to supplementary note 3, wherein
when the spatial change in the luminance values in the one-dimensional data matches the change in the luminance values when there is no floating object on the liquid surface, the determination means determines that there is no foreign object on the liquid surface.

### (Supplementary Note 5)

The foreign object inspection device according to supplementary note 4, wherein
when the spatial change in the luminance values in the one-dimensional data does not match the change in the luminance values when there is no floating object on the liquid surface, the determination means computes a floating object candidate area where there is a possibility that a floating object is present on a basis of the spatial change in the luminance values in the one-dimensional data, recognizes a floating object from the floating object candidate area, and determines whether the recognized floating object is a foreign object or a bubble.

### (Supplementary Note 6)

The foreign object inspection device according to any of supplementary notes 1 to 5, wherein
the acquisition means continuously performs the image capturing a plurality of times and acquires a plurality of the images whose imaging time is different from each other, and
the determination means performs the determination on a basis of spatial changes in luminance values in a plurality of pieces of the one-dimensional data generated from the plurality of images respectively.

### (Supplementary Note 7)

A foreign object inspection system comprising:
the foreign object inspection device according to any one of supplementary notes 1 to 6; a holding mechanism for holding the transparent container in an upright state, and rotating the transparent container about the central axis at a given rotational speed according to an instruction from the foreign object inspection device; and a camera device configured to image the liquid surface in the shape of a paraboloid of revolution formed in the transparent container by the rotation, under the transmitted illumination.

### (Supplementary Note 8)

A foreign object inspection method comprising:
acquiring an image around a liquid surface in a shape of a paraboloid of revolution in a transparent container, the liquid surface in the shape of a paraboloid of revolution being formed when the transparent container containing a transparent liquid is rotated about a central axis at a given speed, the image being captured from a side of the transparent container under transmitted illumination;
acquiring a luminance value of a pixel along a line extending in a direction parallel to the central axis in the image, and generating one-dimensional data of the luminance values; and
on a basis of a spatial change in the luminance values in the one-dimensional data, determining whether or not there is a foreign object on the liquid surface.

### (Supplementary Note 9)

The foreign object inspection method according to supplementary note 8, wherein
the determining includes setting a plurality of the lines at a predetermined interval, generating the one-dimensional data for each of the lines, and performing the determination on a basis of a spatial change in the luminance values in the one-dimensional data for each of the lines.

### (Supplementary Note 10)

The foreign object inspection method according to supplementary note 8 or 9, wherein
the determining includes comparing the spatial change in the luminance values in the one-dimensional data with a change in luminance values when there is no floating object on the liquid surface, and performing the determination on a basis of a result of the comparison.

### (Supplementary Note 11)

The foreign object inspection method according to supplementary note 10, wherein
the determining includes, when the spatial change in the luminance values in the one-dimensional data matches the change in the luminance values when there is no floating object on the liquid surface, determining that there is no foreign object on the liquid surface.

### (Supplementary Note 12)

The foreign object inspection method according to supplementary note 11, wherein
the determining includes, when the spatial change in the luminance values in the one-dimensional data does not match the change in the luminance values when there is no floating object on the liquid surface, computing a floating object candidate area where there is a possibility that a floating object is present on a basis of the spatial change in the luminance values in the one-dimensional data, recognizing a floating object from the floating object candidate area, and determining whether the recognized floating object is a foreign object or a bubble.

### (Supplementary Note 13)

The foreign object inspection method according to any of supplementary notes 8 to 12, wherein
the acquiring includes continuously performing the image capturing a plurality of times and acquiring a plurality of the images whose imaging time is different from each other, and
the determining includes performing the determination on a basis of spatial changes in luminance values in a plurality of pieces of the one-dimensional data generated from the plurality of images respectively.

### (Supplementary Note 14)

A computer-readable medium storing thereon a program for causing a computer to execute processing to:
acquire an image around a liquid surface in a shape of a paraboloid of revolution in a transparent container, the liquid surface in the shape of a paraboloid of revolution being formed when the transparent container containing a transparent liquid is rotated about a central axis at a given speed, the image being captured from a side of the transparent container under transmitted illumination;
acquire a luminance value of a pixel along a line extending in a direction parallel to the central axis in the image, and generate one-dimensional data of the luminance values; and
on a basis of a spatial change in the luminance values in the one-dimensional data, determine whether or not there is a foreign object on the liquid surface.

### REFERENCE SIGNS LIST

- 1: image
- 2: air layer
- 3: liquid layer
- 4: low luminance region
- 5: high luminance region
- 6: foreign object area
- 7: bubble region
- 8: one-dimensional data
- 100: inspection system
- 110: holding device
- 120: illumination device
- 130: camera device
- 200: foreign object inspection device
- 210: communication I/F unit
- 220: operation input unit
- 230: storage unit
- 231: program
- 232: image information
- 233: inspection result information
- 240: arithmetic processing unit
- 241: acquisition unit
- 242: determination unit
- 243: output unit
- 300: display device
- 400: container
- 401: vertex portion
- 500: control table
- 510-1-510-6: luminance measurement line
- 511: left boundary line
- 512: right boundary line
- 513: upper boundary line
- 514: lower boundary line

## Claims

1. A foreign object inspection device comprising:
acquisition means for acquiring an image around a liquid surface in a shape of a paraboloid of revolution in a transparent container, the liquid surface in the shape of a paraboloid of revolution being formed when the transparent container containing a transparent liquid is rotated about a central axis at a given speed, the image being captured from a side of the transparent container under transmitted illumination; and
determination means for acquiring a luminance value of a pixel along a line extending in a direction parallel to the central axis in the image, generating one-dimensional data of the luminance values, and on a basis of a spatial change in the luminance values in the one-dimensional data, determining whether or not there is a foreign object on the liquid surface.

2. The foreign object inspection device according to Claim 1, wherein
the determination means sets a plurality of the lines at a predetermined interval, generates the one-dimensional data for each of the lines, and performs the determination on a basis of a spatial change in the luminance values in the one-dimensional data for each of the lines.

3. The foreign object inspection device according to Claim 1 or 2, wherein
the determination means compares the spatial change in the luminance values in the one-dimensional data with a change in luminance values when there is no floating object on the liquid surface, and performs the determination on a basis of a result of the comparison.

4. The foreign object inspection device according to Claim 3, wherein
when the spatial change in the luminance values in the one-dimensional data matches the change in the luminance values when there is no floating object on the liquid surface, the determination means determines that there is no foreign object on the liquid surface.

5. The foreign object inspection device according to Claim 4, wherein
when the spatial change in the luminance values in the one-dimensional data does not match the change in the luminance values when there is no floating object on the liquid surface, the determination means computes a floating object candidate area where there is a possibility that a floating object is present on a basis of the spatial change in the luminance values in the one-dimensional data, recognizes a floating object from the floating object candidate area, and determines whether the recognized floating object is a foreign object or a bubble.

6. The foreign object inspection device according to any of Claims 1 to 5, wherein
the acquisition means continuously performs the image capturing a plurality of times and acquires a plurality of the images whose imaging time is different from each other, and
the determination means performs the determination on a basis of spatial changes in luminance values in a plurality of pieces of the one-dimensional data generated from the plurality of images respectively.

7. A foreign object inspection system comprising:
the foreign object inspection device according to any one of Claims 1 to 6; a holding mechanism for holding the transparent container in an upright state, and rotating the transparent container about the central axis at a given rotational speed according to an instruction from the foreign object inspection device; and a camera device configured to image the liquid surface in the shape of a paraboloid of revolution formed in the transparent container by the rotation, under the transmitted illumination.

8. A foreign object inspection method comprising:
acquiring an image around a liquid surface in a shape of a paraboloid of revolution in a transparent container, the liquid surface in the shape of a paraboloid of revolution being formed when the transparent container containing a transparent liquid is rotated about a central axis at a given speed, the image being captured from a side of the transparent container under transmitted illumination;
acquiring a luminance value of a pixel along a line extending in a direction parallel to the central axis in the image, and generating one-dimensional data of the luminance values; and
on a basis of a spatial change in the luminance values in the one-dimensional data, determining whether or not there is a foreign object on the liquid surface.

9. The foreign object inspection method according to Claim 8, wherein
the determining includes setting a plurality of the lines at a predetermined interval, generating the one-dimensional data for each of the lines, and performing the determination on a basis of a spatial change in the luminance values in the one-dimensional data for each of the lines.

10. The foreign object inspection method according to Claim 8 or 9, wherein
the determining includes comparing the spatial change in the luminance values in the one-dimensional data with a change in luminance values when there is no floating object on the liquid surface, and performing the determination on a basis of a result of the comparison.

11. The foreign object inspection method according to Claim 10, wherein
the determining includes, when the spatial change in the luminance values in the one-dimensional data matches the change in the luminance values when there is no floating object on the liquid surface, determining that there is no foreign object on the liquid surface.

12. The foreign object inspection method according to Claim 11, wherein
the determining includes, when the spatial change in the luminance values in the one-dimensional data does not match the change in the luminance values when there is no floating object on the liquid surface, computing a floating object candidate area where there is a possibility that a floating object is present on a basis of the spatial change in the luminance values in the one-dimensional data, recognizing a floating object from the floating object candidate area, and determining whether the recognized floating object is a foreign object or a bubble.

13. The foreign object inspection method according to any of Claims 8 to 12, wherein
the acquiring includes continuously performing the image capturing a plurality of times and acquiring a plurality of the images whose imaging time is different from each other, and
the determining includes performing the determination on a basis of spatial changes in luminance values in a plurality of pieces of the one-dimensional data generated from the plurality of images respectively.

14. A computer-readable medium storing thereon a program for causing a computer to execute processing to:
acquire an image around a liquid surface in a shape of a paraboloid of revolution in a transparent container, the liquid surface in the shape of a paraboloid of revolution being formed when the transparent container containing a transparent liquid is rotated about a central axis at a given speed, the image being captured from a side of the transparent container under transmitted illumination;
acquire a luminance value of a pixel along a line extending in a direction parallel to the central axis in the image, and generate one-dimensional data of the luminance values; and
on a basis of a spatial change in the luminance values in the one-dimensional data, determine whether or not there is a foreign object on the liquid surface.
